# FASCICULE DE BREVET EUROPEEN

(11) **EP 0 538 103 B1**
(45) Date de publication et mention de la délivrance du brevet: **09.07.1997**
(21) Numéro de dépôt: 92402747.7
(22) Date de dépôt: 08.10.1992
(51) Int. Cl.: C01B 13/11, H02M 7/48

(54) **Dispositif perfectionné d'alimentation en énergie électrique d'un ozoneur**
Verbesserte Energieversorgungseinrichtung eines Ozonerzeugers
Improved power supply device for ozonizer

(30) Priorité: 16.10.1991 FR 9112772
(43) Date de publication de la demande: 21.04.1993
(73) Titulaire: TRAILIGAZ"Cie GENERALE DE L'OZONE", 95140 Garges-Les-Gonesse (FR)
(72) Inventeur: Moras, Denis, F-95380 Louvres (FR)
(74) Mandataire: Habasque, Etienne Joel Jean-François

(56) Documents cités:
- FR-A- 2 151 394
- FR-A- 2 580 875

## Description

La présente invention concerne un dispositif d'alimentation en énergie électrique d'un ozoneur.

Les ozoneurs industriels connus actuellement sont de type tubulaire et comportent deux électrodes, l'une en verre de qualité électronique sur laquelle est appliquée une tension élevée et l'autre en inox, reliée à la terre.

Ces deux électrodes sont séparées par un espace de décharge dans lequel circule de l'oxygène ou de l'air sec contenant des molécules d'oxygène.

Si on applique aux bornes de ces électrodes une tension suffisamment élevée pour atteindre le point disruptif de l'air, il apparaît, par effet Coronna, une effluve entre celles-ci. Cette effluve ionise l'oxygène dans l'espace de décharge et forme ainsi un gaz composé principalement d'ozone dont la concentration varie en fonction de la puissance appliquée.

Il existe dans l'état de la technique, deux types différents de dispositifs d'alimentation de ces ozoneurs.

Les premiers comportent des moyens permettant d'alimenter l'ozoneur à partir du réseau d'alimentation en connectant un transformateur élévateur de tension sur celui-ci (voir p.e. FR-A-2 151 354).

Le réglage de la puissance est obtenu par un régulateur à induction. Il est également possible d'utiliser un système électronique tel qu'un gradateur, interposé entre le réseau et le transformateur.

Cependant, l'ozoneur étant une charge très capacitive, il est important de compenser l'énergie réactive engendrée en prévoyant deux compensations, l'une série, constituée par exemple par une inductance à noyau et l'autre parallèle, constituée par exemple par l'entrefer du transformateur, pour compenser l'énergie réactive capacitive de l'ozoneur et obtenir une charge inductive.

Cette compensation est indispensable pour pouvoir débloquer correctement le gradateur et donc obtenir un facteur de puissance correct.

Les seconds dispositifs d'alimentation comportent des convertisseurs de puissance permettant d'augmenter la fréquence d'alimentation de l'ozoneur à peu près à 400 Hz et d'améliorer la production d'ozone.

Ces convertisseurs sont constitués par des onduleurs de type série ou parallèle, sur lesquels est connectée soit une charge résonnante de type LC, en général peu maniable et très coûteuse, soit une charge non résonnante, non compensée et à commutation forcée, beaucoup moins coûteuse que les charges LC mais présentant un facteur de puissance déplorable.

Dans les deux types de dispositifs décrits précédemment, il est indispensable de mettre en oeuvre une technique bien particulière de réglage de l'ensemble et notamment pour accorder le transformateur haute tension afin d'obtenir les meilleures conditions de fonctionnement.

Il est également très important de maîtriser la technologie des interrupteurs de puissance tels que des thyristors qui sont mis à rude épreuve à cause des temps de commutation très rapides, des valeurs importantes de DI/DT et de DV/DT et des surtensions inverses très élevées occasionnées par le fait que l'ozoneur est une charge non linéaire.

Par ailleurs, ces systèmes présentent également le désavantage de nécessiter des moyens de démarrage compliquant les séquences de fonctionnement de l'ensemble.

Ceci aboutit à des dispositifs relativement complexes, d'un prix de revient élevé et dont le fonctionnement n'est pas optimisé.

Le but de l'invention est donc de résoudre ces problèmes en proposant un dispositif d'alimentation qui soit simple, fiable, d'un prix de revient peu élevé et qui permette de faire fonctionner l'ozoneur dans des conditions optimales.

A cet effet, l'invention a pour objet un dispositif d'alimentation en énergie électrique d'un ozoneur, caractérisé en ce qu'il comporte une source d'énergie en courant continu, aux bornes de laquelle sont connectés un circuit résonnant comprenant une inductance de commutation en série avec un transformateur d'alimentation de l'ozoneur et un organe commutateur à semi-conducteur piloté par des moyens de déclenchement, de court-circuitage de ce circuit.

Avantageusement, une diode de roue libre est connectée en parallèle aux bornes de l'organe commutateur à semi-conducteur et celui-ci peut comprendre au moins un thyristor asymétrique.

L'invention sera mieux comprise à l'aide de la description qui va suivre, donnée uniquement à titre d'exemple et faite en se référant aux dessins annexés, sur lesquels :
- la Fig.1 représente un schéma synoptique d'un dispositif d'alimentation selon l'invention;
- la Fig.2 représente un schéma synoptique de moyens de déclenchement d'un organe commutateur à semi-conducteur piloté, entrant dans la constitution d'un dispositif selon l'invention; et
- les Fig.3,4 et 5 représentent des courbes illustrant différentes phases de fonctionnement du dispositif selon l'invention.

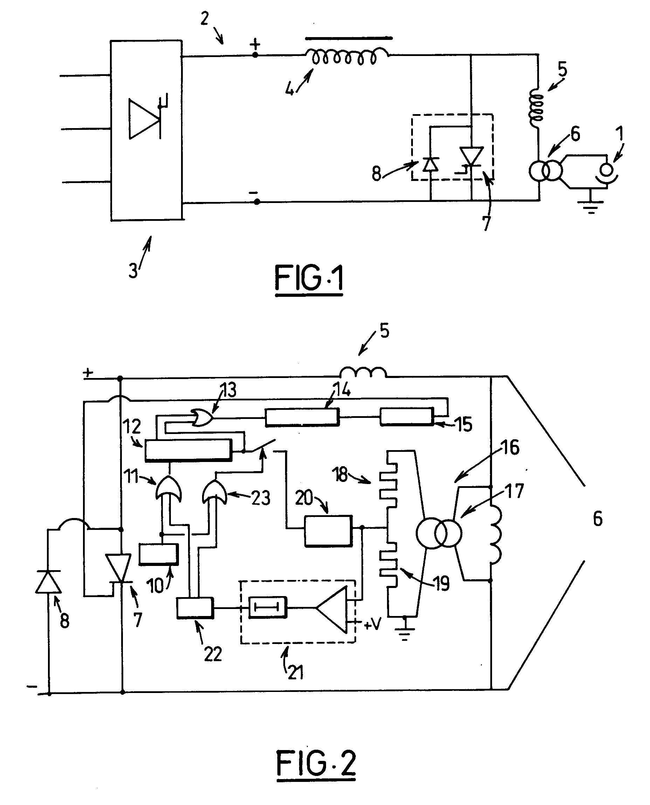

Ainsi qu'on peut le voir sur la Fig.1, un dispositif d'alimentation en énergie électrique selon l'invention, permet d'alimenter un ozoneur désigné par la référence générale 1 sur cette figure, à partir d'une source d'alimentation en courant continu désignée par la référence générale 2.

Cette source d'alimentation en courant continu comporte de manière classique un pont redresseur du type pont de Graetz, à thyristors, désigné par la référence générale 3 et une inductance de lissage 4.

Un circuit résonnant série comprenant une inductance de commutation 5 en série avec un transformateur 6 d'alimentation de l'ozoneur, est connecté en parallèle aux bornes de cette source d'alimentation.

Par ailleurs, un organe commutateur à semi-conducteur 7 piloté par des moyens de déclenchement qui seront décrits plus en détail par la suite, est connecté en parallèle aux bornes de ce circuit pour court-circuiter celui-ci lors de son déclenchement.

Avantageusement, une diode de roue libre 8 est connectée en anti-parallèle aux bornes de cet organe commutateur à semi-conducteur et celui-ci peut comprendre au moins un thyristor asymétrique. Ces thyristors asymétriques sont connus dans l'état de la technique comme étant un ensemble thyristor-diode de roue libre en antiparallèle.

On notera que l'ozoneur 1 est connecté à l'enroulement secondaire du transformateur, tandis que l'enroulement primaire est connecté en série avec l'inductance de commutation 5 dans le circuit résonnant.

Un mode de réalisation des moyens de déclenchement de l'organe commutateur à semi-conducteur piloté est représenté sur la Fig.2.

On reconnait sur cette figure, le thyristor 7,la diode de roue libre 8, l'inductance de commutation 5 et le transformateur d'alimentation de l'ozoneur 6.

Les moyens de déclenchement du thyristor comprennent avantageusement des moyens de génération d'un créneau de démarrage de celui-ci, activés par exemple par un utilisateur, lors du déclenchement du fonctionnement de ce dispositif d'alimentation.

Ces moyens comprennent par exemple une bascule 10 délivrant un signal en créneau à la détection d'un front montant par exemple d'un signal d'horloge.

La sortie de cette bascule est reliée à une porte OU 11 dont la sortie est reliée à une chaîne de génération d'une salve d'impulsions de pilotage du thyristor 7, cette chaîne comportant les éléments désignés par les références 12,13,14 et 15 sur cette figure et comportant respectivement des moyens 12 de mise en forme de la sortie de la porte OU 11, une autre porte OU 13, un générateur de salve d'impulsions 14 et un amplificateur 15 dont la sortie est connectée à la grille du thyristor 7.

Les moyens de déclenchement comprennent également des moyens 16 de mesure d'une valeur représentative de la tension aux bornes du transformateur.

Ces moyens comprennent par exemple un convertisseur de tension 17 aux bornes duquel est connecté un pont diviseur constitué de deux résistances 18 et 19.

On notera que le convertisseur de tension peut par exemple être constitué par un transformateur d'isolement.

La sortie de ce pont diviseur est reliée à des moyens 20 de détection du passage de cette tension par un maximum pour commander des moyens de génération d'une salve d'impulsions afin de redéclencher le thyristor à chaque passage par ce maximum de cette tension.

Dans le mode de réalisation représenté, ces moyens sont constitués par la chaine décrite précédemment et déjà utilisée lors du démarrage du thyristor.

Ces moyens de déclenchement comprennent également, connectés à la sortie des moyens de mesure de la tension aux bornes du transformateur, des moyens 21 de comparaison de cette tension à une valeur seuil + V représentative d'une valeur de tension au-dessous de laquelle l'ozoneur ne produit plus d'ozone, comme cela sera décrit plus en détail par la suite, pour commander les moyens de génération d'une salve d'impulsions afin de déclencher un redémarrage de celui-ci.

La sortie de ces moyens de comparaison 21 est en effet reliée à une bascule 22 de pilotage des moyens de génération du créneau de démarrage 11,12 décrits précédemment, à travers la porte OU 11 et une autre porte OU 23 d'inhibition des moyens de détection du passage par un maximum de la tension aux bornes du transformateur.

On conçoit donc que dans une première phase de focntionnement, l'ozoneur qui est équivalent à un condensateur, se charge à travers l'inductance de commutation 5 et l'inductance de lissage 4 à la tension de la source de courant continu.

Le thyristor est ensuite déclencher par pilotage de la bascule 10 et génération d'un créneau de démarrage de ce thyristor pour court-circuiter le circuit résonnant série décrit.

Ensuite, le thyristor est redéclenché à chaque passage par un maximum de la tension aux bornes de la charge et la variation de puissance est obtenue par contrôle de l'amorçage des thyristors du pont redresseur 3 de la source d'alimentation, pour régler le niveau de charge de l'ozoneur.

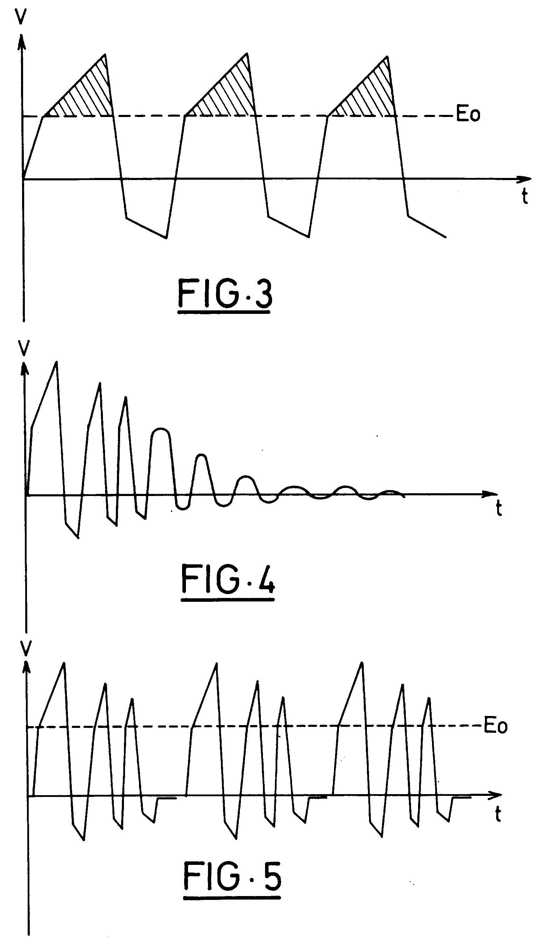

Le signal théorique de tension obtenu aux bornes du transformateur est représenté sur la Fig.3.

L'utilisation d'un seul organe commutateur à semi-conducteur engendre une onde de tension qui génère de l'ozone uniquement sur la partie positive du signal et lorsque la tension appliquée est supérieure à EO correspondant à la valeur disruptive de l'air.

Cependant, la tension moyenne aux bornes du transformateur d'alimentation de l'ozoneur n'est pas nulle, ce qui engendre un élément résistif dans le circuit résonnant. Il apparaît donc qu'un phénomène d'amortissement du signal de tension est appliqué aux bornes de la charge comme on peut le voir sur la Fig.4.

Pour résoudre ce problème, on utilise le fait que la tension appliquée est à un moment ou à un autre inférieure à la tension disruptive de l'air, c'est à dire inférieure à la tension au-dessous de laquelle l'ozoneur produit de l'ozone, pour réaliser une remise à zéro de l'ensemble et réaliser un nouveau démarrage de celui-ci par génération d'un nouveau créneau de démarrage à l'aide de la bascule 22.

On voit en effet sur la Fig.3, que le générateur d'ozone n'engendre d'ozone que si la tension qui lui est appliquée est supérieure à la valeur EO correspondant à la valeur de tension du point disruptif de l'air.

Ainsi qu'on l'a indiqué précédemment, le démarrage du dispositif se fait par génération d'un créneau de démarrage à la suite de la détection d'un front montant par exemple d'une horloge, par la bascule 10.

Durant cette phase de démarrage, les moyens de détection du passage par un maximum de la tension aux bornes du transformateur, désignés par la référence 20 sur la figure 2, sont inhibés, de même que les moyens de comparaison 21 et la bascule 22. L'ordre de démarrage engendre un premier créneau de démarrage qui est mis en forme dans la chaîne de génération de salve décrite précédemment et se traduit par la génération d'une salve d'impulsions assurant la fermeture du thyristor et permettant de débloquer les moyens de détection de passage par un maximum de la tension aux bornes du transformateur et les moyens de comparaison.

Ceux-ci prennent alors le relais des moyens de génération du créneau de démarrage et assurent la commutation du thyristor par l'oscillation engendrée dans le circuit série à travers le transformateur d'isolement 17 et le pont diviseur 18,19.

Du fait de l'amortissement de la tension aux bornes du transformateur, les moyens de comparaison détectent le passage de la tension au-dessous du point disruptif de l'air, EO, et réinitialisent le dispositif en déclenchant une nouvelle phase de démarrage de celui-ci par pilotage des moyens de génération d'un créneau de démarrage du thyristor.

On conçoit que tant que la tension appliquée aux bornes de la charge est supérieure à la valeur de tension au-dessous de laquelle l'ozoneur ne produit plus d'ozone, le déclenchement du thyristor est assuré par les moyens de détection du passage par un maximum de la tension aux bornes du transformateur et que lorsque cette tension est inférieure à ce point disruptif, les moyens de comparaison et la bascule associée déclenchent un redémarrage de l'ensemble, ce qui permet de réinitialiser le dispositif.

Pour arrêter le dispositif, il suffit d'inhiber les moyens de détection du passage par un maximum de la tension aux bornes du transformateur, pour qu'il n'y ait plus de déclenchement du thyristor. Cette inhibition est par exemple commandée par l'utilisateur.

La Fig.5 illustre le signal de tension obtenu aux bornes de la charge.

Le démarrage et l'arrêt du dispositif sont commandés par exemple par l'utilisateur grâce à des interrupteurs de démarrage et d'arrêt de type connu en soi, reliés à la bascule de démarrage 10 et aux moyens 20 de détection de passage par un maximum de la tension aux bornes du transformateur.

## Revendications

1. Dispositif d'alimentation en énergie électrique d'un ozoneur (1), caractérisé en ce qu'il comporte une source d'alimentation en courant continu (2), aux bornes de laquelle sont connectés un circuit résonnant comprenant une inductance de commutation (5) en série avec un transformateur (6) d'alimentation au secondaire duquel est connecté ledit ozoneur et un organe commutateur à semi-conducteur (7) piloté par des moyens de déclenchement, de court-circuitage du dit circuit résonnant.

2. Dispositif selon la revendication 1, caractérisé en ce qu'une diode de roue libre (8) est connectée en anti-parallèle aux bornes de l'organe commutateur à semi-conducteur.

3. Dispositif selon la revendication 2, caractérisé en ce que l'organe commutateur à semi-conducteur comprend au moins un thyristor asymétrique.

4. Dispositif selon l'une quelconque des revendications précédentes, caractérisé en ce que les moyens de déclenchement comprennent des moyens (10,11,12) de génération d'un créneau de démarrage de l'organe commutateur à semi-conducteur piloté, et des moyens (16) de mesure d'une valeur représentative de la tension aux bornes du transformateur, dont la sortie est reliée à des moyens (20) de détection du passage de cette tension par un maximum, pour commander des moyens (13,14,15) de génération d'impulsions de déclenchement de l'organe commutateur à semi-conducteur piloté, lors du démarrage du dispositif et à chaque passage par un maximum de cette tension.

5. Dispositif selon la revendication 4, caractérisé en ce que les moyens de déclenchement comprennent en outre, connectés à la sortie des moyens (16) de mesure de la tension aux bornes du transformateur, des moyens (21) de comparaison de cette tension à une valeur de tension au-dessous de laquelle l'ozoneur ne produit plus d'ozone, pour commander les moyens de génération (11,12,13,14,15) des impulsions de déclenchement du thyristor afin de déclencher un redémarrage de celui-ci.

6. Dispositif selon la revendication 5, caractérisé en ce que les moyens de déclenchement comprennent des moyens de démarrage du dispositif par pilotage des moyens de génération (10) du créneau de démarrage et des moyens de coupure du dispositif par inhibition des moyens (20) de détection du passage par un maximum de la tension aux bornes du transformateur.

## Claims

1. An electrical power supply device for an ozonizer (1), characterized in that it comprises a direct current source (2), to the terminals of which are connected a resonant circuit comprising a switching inductance (5) in series with a supply transformer (6), to the secondary of which is connected the said ozonizer, and a semiconductor switching device (7) controlled by trigger means to short-circuit the said resonant circuit.

2. A device according to claim 1, characterized in that a freewheeling diode (8) is connected back to back to the terminals of the semiconductor switching device.

3. A device according to claim 2, characterized in that the semiconductor switching device comprises at least one asymmetric thyristor.

4. A device according to any of the preceding claims, characterized in that the trigger means comprise means (10, 11, 12) for generating a strobe pulse for initiating the controlled semiconductor switching device and means (16) for measuring a value representative of the voltage on the terminals of the transformer, the output of these means being connected to peak detection means (20) for this voltage, which control means (13, 14, 15) for generating trigger pulses for the controlled semiconductor switching device at the time of initiation of the device and at each passage of this voltage through a peak.

5. A device according to claim 4, characterized in that the trigger means further comprise comparing means (21) connected to the output of the means (16) for measuring the voltage on the terminals of the transformer for comparing this voltage with a voltage value below which the ozonizer no longer produces ozone, to control the means (11, 12, 13, 14, 15) for generating pulses for triggering the thyristor in order to trigger the re-initiation thereof.

6. A device according to claim 5, characterized in that the trigger means comprise means for initiating the device by controlling the means (10) for generating an initiating strobe pulse and means for turning off the device by inhibiting the peak detection means (20) for the voltage on the terminals of the transformer.

## Patentansprüche

1. Energieversorgungsvorrichtung eines Ozonisierungsapparats (1), dadurch gekennzeichnet, daß sie eine Gleichspannungsquelle (2) aufweist, an deren Anschlußklemmen ein Resonanzkreis mit einer Kommutierungsinduktivität (5) in Serie mit einem Versorgungstransformator (6), an dessen Sekundärwicklung der Ozonisierungsapparat angeschlossen ist, und ein von Triggermitteln gesteuerter Halbleiterstromwender (7) im Kurzschluß dieses Resonanzkreises angeschlossen sind.

2. Vorrichtung nach Anspruch 1, dadurch gekennzeichnet, daß eine Freilaufdiode (8) entgegengesetzt parallel an die Anschlußklemmen des Halbleiterstromwenders angeschlossen ist.

3. Vorrichtung nach Anspruch 2, dadurch gekennzeichnet, daß der Halbleiterstromwender mindestens einen asymmetrischen Thyristor aufweist.

4. Vorrichtung nach einem der vorhergehenden Ansprüche, dadurch gekennzeichnet, daß die Triggermittel Generatormittel (10, 11, 12) für einen Zündimpuls zum Zünden des gesteuerten Halbleiterstromwenders und Mittel (16) zum Messen eines für die Spannung an den Anschlußklemmen des Transformators repräsentativen Wertes, wobei der Ausgang davon an Mittel (20) zum Erfassen eines Durchgangs dieser Spannung durch einen Maximalwert angeschlossen ist, zum Steuern von Triggerpulsgeneratormitteln (13, 14, 15) für den gesteuerten Halbleiterstromwender während des Startens der Vorrichtung und bei jedem Durchlaufen der Spannung durch einen Maximalwert aufweisen.

5. Vorrichtung nach Anspruch 4, dadurch gekennzeichnet, daß die Triggermittel ferner, an den Ausgang der Mittel (16) zum Messen der Spannung an den Anschlußklemmen des Transformators angeschlossen, Mittel (21) des Vergleichens dieser Spannung mit einem Spannungswert, unterhalb dem der Ozonisierungsapparat kein Ozon mehr produziert, zum Steuern der Triggerpulsgeneratormittel (11, 12, 13, 14, 15) für den Thyristor, um dessen erneutes Zünden auszulösen, aufweisen.

6. Vorrichtung nach Anspruch 5, dadurch gekennzeichnet, daß die Triggermittel Mittel des Startens der Vorrichtung durch Steuerung der Generatormittel (10) des Zündimpulses des Zündens und Mittel des Abschaltens der Vorrichtung durch Hemmen der Mittel (20) des Erfassens eines Durchgangs der Spannung an den Anschlußklemmen des Transformators durch einen Maximalwert aufweisen.
